# EUROPÄISCHE PATENTSCHRIFT

(11) **EP 1 977 930 B1**
(45) Veröffentlichungstag und Bekanntmachung des Hinweises auf die Patenterteilung: **31.10.2012**
(21) Anmeldenummer: 08006741.6
(22) Anmeldetag: 02.04.2008
(51) Int. Cl.: B60R 5/04

(54) **Heckklappenanordnung eines Kraftfahrzeugs**
Hatchback assembly of a vehicle
Système de hayon d'un véhicule automobile

(30) Priorität: 02.04.2007 DE 102007015864
(43) Veröffentlichungstag der Anmeldung: 08.10.2008
(73) Patentinhaber: GM Global Technology Operations LLC, Detroit, MI 48265-3000 (US)
(72) Erfinder: Leopold, Frank, 65232 Taunusstein-Orlen (DE)
(74) Vertreter: Kraenzmer, Martin

(56) Entgegenhaltungen:
- EP-A- 0 007 559
- EP-A- 0 556 472
- DE-A1- 2 506 620
- DE-A1- 10 340 523
- DE-A1- 19 724 630
- DE-A1-102004 029 758
- DE-A1-102005 002 203
- DE-B- 1 128 769
- US-A- 3 879 080
- US-A- 5 692 792

## Beschreibung

Die vorliegende Erfindung liegt auf dem Gebiet der Kraftfahrzeugtechnik und betrifft eine Heckklappenanordnung eines Kraftfahrzeugs, insbesondere Personenkraftfahrzeugs.

### Stand der Technik

Moderne Kraftfahrzeuge werden oftmals so gebaut, dass sie in möglichst vielfältiger Weise an die jeweiligen Bedürfnisse der Fahrzeugnutzer angepasst werden können, sei es um eine möglichst große Personenzahl befördern zu können, sei es um möglichst viel Laderaum zum Transport von Lasten zur Verfügung zu haben.

Beispielsweise werden zu diesem Zweck so genannte "Kompaktvans" als Personenkraftfahrzeuge im Handel vertrieben, bei denen es sich um Großraumwagen handelt, die eine besondere große Variabilität in der Gestaltung des Fahrgastraums haben. Typischer Weise ist in solchen Kompaktvans hinter einer zweiten Sitzreihe noch eine dritte Sitzreihe vorhanden, um bis zu 7 oder 8 Personen befördern zu können. Die Sitze der beiden Sitzreihe können zusammengelegt und umgeklappt werden, so dass auf diese Weise, ohne die Notwendigkeit eines umständlichen Sitzausbaus, ein relativ großer Laderaum zur Beladung mit Lasten zur Verfügung steht. Beispielsweise wird ein 7-sitziges Großraumfahrzeug diese Art von der Anmelderin unter der Bezeichnung "Zafira" im Handel vertrieben.

Obgleich die solchen Kompaktvans innewohnende Variabilität des Fahrgastraums hinsichtlich der Personen- und Lastenbeförderung durchaus die gewöhnlichen Bedürfnisse der Nutzer zufrieden zu stellen vermag, hat sich in der Praxis gezeigt, dass bei der Beförderung einer maximalen Personenzahl meist auch noch Lasten, wie beispielsweise Gepäckstücke, zu befördern sind. In herkömmlichen Kompaktvans steht jedoch nur mehr vergleichsweise wenig Laderaum zur Beförderung von Lasten zur Verfügung, wenn das Fahrzeug mit einer maximalen Personenzahl besetzt ist.

Die deutsche Patentanmeldung Nr. 19724630 A1 zeigt eine Heck partie entsprechend dem Oberbesriff des Auspruchs 1. . Die deutsche Patentanmeldung Nr. 102005002203 A1 zeigt eine zweiteilige Heckklappe, bei der ein unterer Heckklappenabschnitt abgeklappt werden kann, um den Laderaum durch ein Erweiterungselement zu erweitern.

### Aufgabenstellung

Demgegenüber besteht die Aufgabe der vorliegenden Erfindung darin, zusätzlichen Laderaum zum Transport von Lasten, insbesondere bei einer voll besetzten Fahrgastzelle, zur Verfügung zu stellen.

Diese Aufgabe wird nach dem Vorschlag der Erfindung durch eine Heckklappe bzw. Heckklappenanordnung mit den Merkmalen des unabhängigen Anspruchs gelöst. Vorteilhafte Ausgestaltungen der Erfindung sind durch die Merkmale der Unteransprüche angegeben.

Erfindungsgemäß ist eine Heckklappenanordnung oder Heckpartie eines Kraftfahrzeugs, insbesondere Personenkraftfährzeugs, gezeigt. Die Heckklappenanordnung oder Heckpartie umfasst ein fahrzeuginnenseitig an der Heckklappe angebrachtes Laderaumerweiterungselement, das so ausgebildet ist, dass es einen Hohlraum (Innenraum) umschließt. Das Laderaumerweiterungselement ist hierbei mit einem Laderaum des Kraftfahrzeugs zu dessen Erweiterung nahezu oder vollständig gas- und wasserdicht verbunden beziehungsweise verbindbar und kann zwischen der (geöffneten bzw. in einem Teilabschnitt geöffneten) Heckklappe und einem am Fahrzeugheck angebrachten Heckträger verspannt werden. Hier und im Folgenden beziehen sich die Ortsangaben fahrzeuginnenseitig oder fahrzeugaußenseitig auf eine geschlossene Heckklappe oder geschlossenen Heckklappenabschnitt.

Das Laderaumerweiterungselement ist aus einem nachgiebigen, wasser- und gasdichten Material gefertigt, um es in einfacher Weise, verbunden mit der Heckklappe, in einem zusammengelegten Zustand verstauen zu können.

In der erfindungsgemäßen Heckklappenanordnung (bzw. Heckpartie) umfasst die Heckklappe einen separat (unabhängig von der Heckklappe) klappbaren Heckklappenabschnitt, an welchem das Laderaumerweiterungselement fahrzeuginnenseitig angebracht ist. Beispielsweise ist die Heckklappe hierzu in einen oberen Heckklappenabschnitt und einen separat klappbaren unteren Heckklappenabschnitt geteilt. So umfasst der klappbare Heckklappenabschnitt fahrzeugaußenseitig einen Heckklappenabschnittsdeckel und fahrzeuginnenseitig eine Heckklappenabschnittsverkleidung, wobei das Laderaumerweiterungselement fahrzeuginnenseitig am Heckklappenabschnittsdeckel angebracht ist. Zudem ist die Heckklappenabschnittsverkleidung mit einer Durchbrechung versehen, welche mit einer Verbindungsöffnung des Laderaumerweiterungselements zur Verbindung mit dem Laderaum verbunden oder verbindbar ist.

Bei einer weiteren vorteilhaften Ausgestaltung der erfindungsgemäßen Heckklappenanordnung bzw. Heckpartie ist das Laderaumerweiterungselement beispielsweise auf der dem Fahrzeug abgewandten Seite mit einer wasser- und gasdicht verschließbaren Beladungsöffnung zum Beladen des Laderaums versehen.

In der erfindungsgemäßen Heckklappenanordnung bzw. Heckpartie des Kraftfahrzeugs ist der Heckträger derart verschiebbar im Fahrzeugheck integriert, dass er von einer Ruheposition in eine Gebrauchsposition und umgekehrt überführbar ist.

Die Erfindung erstreckt sich weiterhin auf ein Kraftfahrzeug, das mit einer wie vorstehenden beschriebenen Heckpartie ausgerüstet ist.

### Ausführungsbeispiel

Die Erfindung wird nun anhand eines Ausführungsbeispiels näher erläutert, wobei Bezug auf die beigefügten Zeichnungen genommen wird. Es zeigen:
- Fig. 1: eine schematische perspektivische Ansicht der Heckpartie eines Personenkraftfahrzeugs mit der erfindungsgemäßen Heckklappenanordnung bei geschlossener Heckklappe;
- Fig. 2: eine schematische perspektivische Ansicht der Heckklappenanordnung von Fig. 1 mit aufgeklapptem Heckklappenabschnittsdeckel ohne aufgespanntes Laderaumerweiterungselement;
- Fig. 3: eine weitere schematische perspektivische Ansicht der Heckklappenanordnung von Fig. 1 mit aufgeklapptem Heckklappenabschnittsdeckel und aufgespanntem Laderaumerweiterungselement.

Eine insgesamt mit der Bezugszahl 1 bezeichnete Heckklappenanordnung eines Personenkraftfahrzeugs mit Steilheck umfasst eine insgesamt mit der Bezugszahl 2 bezeichnete Heckklappe zum Öffnen und Verschließen einer Laderaumöffnung (Kofferraumöffnung) des Kraftfahrzeugs. Die Heckklappe 2 ist aus zwei Abschnitten aufgebaut, nämlich einem oberen Heckklappenabschnitt 3 mit einer darin aufgenommenen Glasscheibe 20 und einem unteren Heckklappenabschnitt 4, wobei der obere Heckklappenabschnitt 3 etwa auf halber Höhe der Heckklappe 2 in den unteren Heckklappenabschnitt 4 übergeht. Zwischen dem oberen Heckklappenabschnitt 3 und dem unteren Heckklappenabschnitt 4 erstreckt sich im Wesentlichen in horizontaler Richtung eine Trennfuge 16.

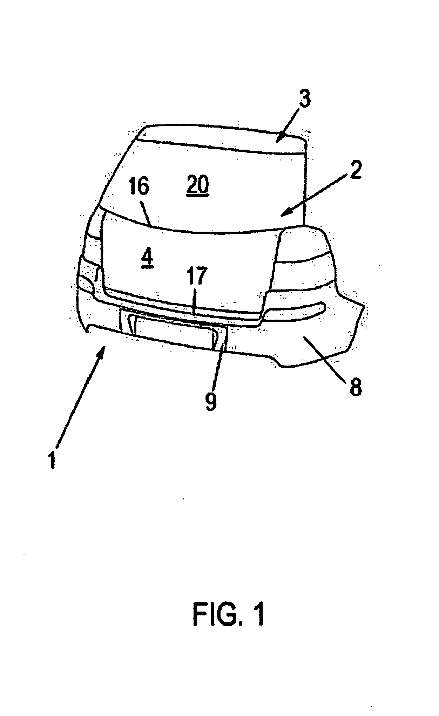

Die Heckklappe 2 kann in gewöhnlicher Weise um ein in etwa am Übergang der Heckklappe 2 in den Dachabschnitt des Kraftfahrzeugs bzw. nahe der oberen Kante 19 des oberen Heckklappenabschnitts 3 angeordnetes Scharniergelenk verschwenkt werden, um auf diese Weise die Laderaumöffnung des Personenkraftfahrzeugs freizugeben oder zu verschließen. In Fig. 1 ist die Heckklappe 2 in geschlossenem Zustand gezeigt, wobei die Heckklappe 2 an einem Karosserieabschnitt oberhalb des hinteren Stoßfängerabschnitts 8 bzw. nahe der unteren Kante 17 des unteren Heckklappenabschnitts 4 mithilfe eines in den Figuren nicht näher dargestellten Verriegelungsmechanismus verriegelbar ist.

Im Bereich des unteren Heckklappenabschnitts 4 ist die Heckklappe 2 fahrzeuginnenseitig mit einer Heckklappenabschnittsverkleidung 5 versehen. Der untere Heckklappenabschnitt 4 ist somit aus einer fahrzeuginnenseitig angeordneten Heckklappenabschnittsverkleidung 5 und einem fahrzeugaußenseitig angeordneten Heckklappenabschnittsdeckel 7 aufgebaut, wobei letzterer aus Blech gefertigt ist und einen Teil der Fahrzeugkarosserie formt. In der Heckklappenabschnittsverkleidung 5 ist eine im Wesentlichen rechteckförmige Durchbrechung 6 ausgespart, die in den Laderaum beziehungsweise Fahrzeuginnenraum des Kraftfahrzeugs mündet.

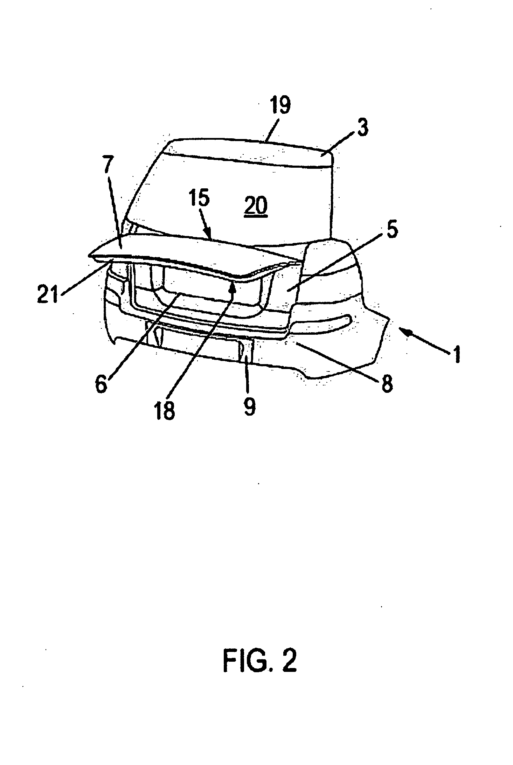

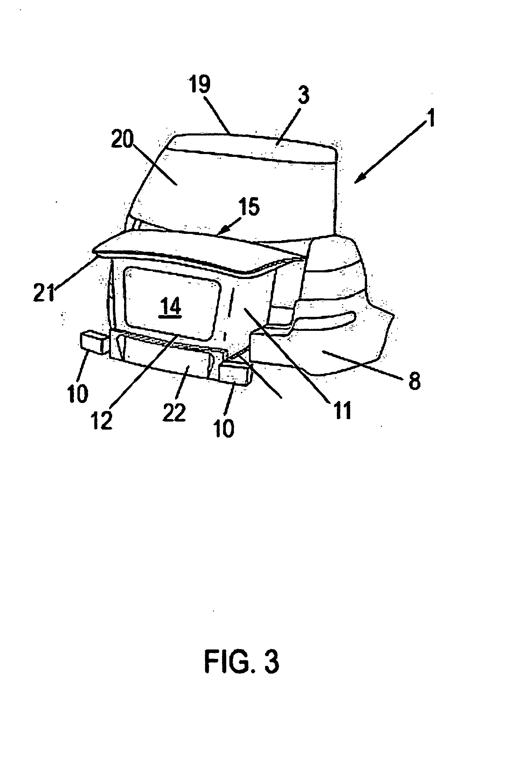

Wie in den Figuren 2 und 3 dargestellt ist, kann der aus Blech gefertigte Heckklappenabschnittsdeckel 7 gegenüber der Heckklappenabschnittsverkleidung 5 und dem oberen Heckklappenabschnitt 3 verschwenkt werden, zu welchem Zweck ein zwischen dem oberen Heckklappenabschnitt 3 und dem unteren Heckklappenabschnitt 4 angeordnetes Scharniergelenk 15 vorgesehen ist, das in den Figuren nicht näher dargestellt ist. Mittels eines nicht näher dargestellten Halte- oder Verrastungsmechanismus kann der Heckklappenabschnittsdeckel 7 hierbei in aufgeklappter Position in einer oder mehreren gewünschten Stellungen gehalten oder verrastet werden. Wie in Fig. 2 und Fig. 3 gezeigt ist, wird der Heckklappenabschnittsdeckel 7 beispielsweise in einer Stellung verrastet bzw. gehalten, bei welcher der Heckklappenabschnittsdeckel 7 in etwa parallel zu einer Fahrbahn orientiert ist, auf der sich das Kraftfahrzeug befindet. Wird der Heckklappenabschnittsdeckel 7 aufgeklappt, so wird durch die Durchbrechung 6 der Heckklappenabschnittsverkleidung 5 eine Öffnung des Laderaums bzw. des Fahrzeuginnenraums nach außen hin freigegeben. Im geschlossenen Zustand verschließt der Heckklappenabschnittsdeckel 7 den Kofferraum bzw. den Fahrzeuginnenraum nach außen hin.

An seiner unteren Kante 21 kann der Heckklappenabschnittsdeckel 7 unabhängig von der Heckklappe 2 und insbesondere unabhängig von der Heckklappenabschnittsverkleidung 5 mithilfe eines Verriegelungsmechanismus an der Fahrzeugkarosserie verriegelt werden, so dass der Heckklappenabschnittsdeckel 7 unabhängig von der Heckklappe 2 in eine Öffnungs- oder Schließstellung überführbar ist.

Die Heckpartie des Kraftfahrzeugs ist mit einem hinteren Stoßfängerabschnitt 8 versehen, in dem ein Heckträger 9 integriert ist. Der Heckträger 9 kann durch Verschieben in Fahrzeuglängsrichtung von einer Ruheposition in eine Gebrauchsposition und umgekehrt überführt werden. In den Figuren 1 und 2 ist eine Situation gezeigt, in der sich der Heckträger 9 in Ruheposition befindet und mit den restlichen Abschnitten des hinteren Stoßfängerabschnitts im Wesentlichen bündig abschließt, während Fig. 3 eine Situation darstellt, in der der Heckträger 9 in Gebrauchsposition ausgezogen ist. Der verschiebbare Heckträger 9 umfasst beispielsweise einen schubladenförmigen Auszug 13, welcher mithilfe eines in den Figuren nicht dargestellten Gestells auf der Unterseite des Fahrzeugbodens befestigt ist. Der Auszug 13 kann zum Beispiel mittels einer teleskopischen Führung im Gestell gelagert sein. Am Heckträger 9 ist weiterhin eine Vertiefung 22 zur Aufnahme eines Nummernschilds geformt. Am Heckträger 9 angebrachte Rücklichter 10 können seitlich neben der Vertiefung 22 des Nummernschilds ausgeklappt weden. Ein derartiger mit dem Fahrzeug fest verbundener, verschiebbarer Heckträger ist als solcher bekannt und beispielsweise in der europäischen Patentanmeldung EP 1 574 395 der Anmelderin beschrieben, so dass sich weitere Erläuterungen hier erübrigen.

Des Weiteren ist auf der fahrzeuginnenseitigen Fläche 18 des Heckklappenabschnittsdeckels 7 ein in Form eines Stoffbeutels mit Öffnung ausgebildetes Laderaumerweiterungselement 11 befestigt. Das Laderaumerweiterungselement 11 ist aus einem nachgiebigen, wasser- und luftundurchlässigen Material gefertigt und befindet sich bei abgeklapptem Heckklappenabschnittsdeckel 7 in einem zusammengelegten Zustand zwischen dem Heckklappenabschnittsdeckel 7 und der Heckklappenabschnittsverkleidung 5. Es kann beispielsweise mittels als Spannbänder ausgebildete Befestigungselemente am Heckklappenabschnittsdeckel 7 in zusammengelegter Form fixiert werden. Wird der Heckklappenabschnittsdeckel 7 aufgeklappt, entfaltet sich das Laderaumerweiterungselement 11, gegebenenfalls nach erfolgtem Lösen der Befestigungselemente, und kann zwischen dem Heckklappenabschnittsdeckel 7 und dem in seine Gebrauchsposition verschobenen (ausgezogenen) Heckträger 9 zeltartig verspannt werden. Das zwischen dem Heckklappenabschnittsdeckel 7 und dem Heckträger 9 verspannte Laderaumerweiterungselement 11 formt dann einen vergleichsweise großen Hohlraum, welcher fahrzeugseitig eine unverschlossene Verbindungsöffnung zur Durchbrechung 6 der Heckklappenabschnittsverkleidung 5 hin aufweist. Die fahrzeugseitige Verbindungsöffnung des Laderaumerweiterungselements 11 hat in etwa eine Passform zur Durchbrechung 6 der Heckklappenabschnittsverkleidung 5 und kann mit dieser nahezu oder vollständig wasser- und gasdicht, beispielsweise mittels eines Klettverschlusses, verbunden werden. Im verspannten Zustand wird durch den Hohlraum des Laderaumerweiterungselements 11 somit eine nahezu oder vollständig gas- und wasserdichte Volumenerweiterung des Laderaums beziehungsweise des Fahrzeuginnenraums des Kraftfahrzeugs bereit gestellt. Durch die gas- und wasserdichte Anbindung des Laderaumerweiterungselements 11 an die Durchbrechung 6 der Heckklappenverkleidung kann ein Eindringen von giftigen Auspuffgasen, Spritz- und Regenwasser, sowie Umgebungsluft in den Laderaum bzw. Fahrzeuginnenraum vollständig oder zumindest weitestgehend verhindert werden. Vorteilhaft ist die fahrzeugseitige Öffnung des Laderaumerweiterungselements 11 dauerhaft mit der Durchbrechung 6 der Heckklappenabschnittsverkleidung 5 verbunden, so dass das entfaltete Laderaumerweiterungselement zum dessen Aufspannen lediglich am Heckträger befestigt werden muss.

Das Laderaumerweiterungselement 11 ist weiterhin mit einer Beladungsöffnung versehen, die durch eine Abdeckung 14 und einen Verschlussmechanismus 12, beispielsweise ein Reiß- oder Klettverschluss oder dergleichen, weitestgehend oder vollständig gas- und wasserdicht verschließbar ist. Durch die Beladungsöffnung ist ein schneller Zugriff von außen zum Hohlraum des Laderaumerweiterungselements bzw. Laderaum des Kraftfahrzeugs ermöglicht.

Durch das erfindungsgemäße Laderaumerweiterungselement kann somit in vorteilhafter Weise eine Erweiterung des Laderaums bzw. Fahrgastinnenraums des Kraftfahrzeugs erreicht werden, so dass insbesondere bei einem voll besetztem Fahrzeug ein vergrößerter Laderaum zum Transport von Lasten zur Verfügung steht.

### Bezugszeichenliste

1 Heckklappenanordnung
2 Heckklappe
3 oberer Heckklappenabschnitt
4 unterer Heckklappenabschnitt
5 Heckklappenabschnittsverkleidung
6 Durchbrechung
7 Heckklappenabschnittsdeckel
8 hinterer Stoßfängerabschnitt
9 Heckträger
10 Rücklicht
11 Laderaumerweiterungselement
12 Verschlussmechanismus
13 Auszug
14 Abdeckung für Beladungsöffnung
15 Scharniergelenk
16 Trennfuge
17 Kante
18 Fläche
19 Kante
20 Glasscheibe
21 Kante
22 Vertiefung

## Patentansprüche

1. Heckpartie eines Kraftfahrzeugs, insbesondere Personenkraftfahrzeugs, mit einer Heckklappenanordnung (1) mit einem an einer Heckklappe (2) fahrzeuginnenseitig angebrachten, einen Hohlraum umschließenden Laderaumerweiterungselement (11), welches aus einem nachgiebigen, wasser-und gasdichten Material gefertigt, mit einem Laderaum des Kraftfahrzeugs zu dessen Erweiterung zumindest nahezu gas-und wasserdicht verbunden bzw. verbindbar ist und zwischen der Heckklappe (2) und einem am Fahrzeugheck angebrachten Heckträger (9) verspannbar ist, **dadurch gekennzeichnet, dass** die Heckklappe (2) einen separat nach oben klappbaren Heckklappenabschnitt (4) umfasst, an welchem das Laderaumerweiterungselement (11) fahrzeuginnenseitig angebracht ist, und wobei der klappbare Heckklappenabschnitt (4) fahrzeugaußenseitig einen Heckklappenabschnittsdeckel (7) und fahrzeuginnenseitig eine Heckklappenabschnittsverkleidung (5) umfasst, wobei das Laderaumerweiterungselement (11) fahrzeuginnenseitig am Heckklappenabschnittsdeckel (7) angebracht und die Heckklappenabschnittsverkleidung (5) mit einer Durchbrechung (6) versehen ist, welche mit einer Verbindungsöffnung des Laderaumerweiterungselements (11) zur Verbindung mit dem Laderaum verbunden oder verbindbar ist wobei der Heckträger (9) im Fahrzeugheck in Fahrzeuglängsrichtung derart verschiebbar integriert ist, dass er von einer Ruheposition in eine Gebrauchsposition zum Verspannen des Laderaumerweiterungselements (11) und umgekehrt überführbar ist.

2. Heck partie nach Anspruch 1, bei welcher die Heckklappe (2) in einen oberen Heckklappenabschnitt (3) und einen separat klappbaren unteren Heckklappenabschnitt (4) geteilt ist.

3. Heck partie nach einem der Ansprüche 1 bis 2, bei welcher das Laderaumerweiterungselement (11) mit einer wasser- und gasdicht verschließbaren Beladungsöffnung zum Beladen des Laderaums versehen ist.

4. Kraftfahrzeug mit einer Heckpartie nach einem der Ansprüche 1 bis 3.

## Claims

1. A rear section of a motor vehicle, especially a passenger car, comprising a tailgate arrangement (1) with a cargo bay expansion element (11) which is attached to a tailgate (2) on the inside of the vehicle, encloses a hollow space, is made of a resilient, water-proof and gas-tight material, and is or can be connected with a cargo space of the motor vehicle in a virtually gas-tight and water-proof manner for its expansion, and can be clamped between the tailgate (2) and a rear support (9) attached to the rear of the vehicle, **characterized in that** the tailgate (2) comprises a tailgate section (4) which can be folded upwardly in a separate way, to which the cargo bay expansion element (11) is attached on the inside of the vehicle, and with the foldable tailgate section (4) comprising a tailgate section cover (7) on the outside of the vehicle and a tailgate section paneling (5) on the inside of the vehicle, with the cargo bay expansion element (11) being attached to the tailgate section cover (7) on the inside of the vehicle and the tailgate section paneling (5) being provided with a breakthrough (6) which is or can be connected with a connecting opening of the cargo bay expansion element (11) for connection with the cargo bay, with the rear support (9) being displaceably integrated in the rear of the vehicle in the longitudinal direction of the vehicle in such a way that it can be transferred from an idle position to an in-use position for clamping the cargo bay expansion element (11) and vice versa.

2. A rear section according to claim 1, wherein the tailgate (2) is divided into an upper tailgate section (3) and a separately foldable bottom tailgate section (4).

3. A rear section according to one of the claims 1 to 2, wherein the cargo bay expansion element (11) is provided with a loading opening for loading the cargo bay, which loading opening can be closed in a water-proof and gas-tight manner.

4. A motor vehicle with a rear section according to one of the claims 1 to 3.

## Revendications

1. Partie arrière d'un véhicule à moteur, en particulier d'un véhicule à moteur pour le transport de personnes, avec un dispositif de hayon (1) avec un élément d'agrandissement de l'espace de chargement (11) disposé sur un hayon (2) du côté de l'intérieur du véhicule et délimitant un espace creux, qui est fait d'un matériau souple, étanche à l'eau et aux gaz, qui est relié ou peut être relié avec un espace de chargement du véhicule à moteur afin d'agrandir celui-ci de façon au moins presque étanche aux gaz et à l'eau et qui peut être tendu entre le hayon (2) et un support de hayon (9) disposé sur l'arrière du véhicule, **caractérisée en ce que** le hayon (2) comprend une partie de hayon (4) pouvant être rabattue séparément vers le haut, sur laquelle l'élément d'agrandissement de l'espace de chargement (11) est disposé du côté de l'intérieur du véhicule, et dans laquelle la partie de hayon rabattable (4) comprend du côté de l'extérieur du véhicule un couvercle de partie de hayon (7) et du côté de l'intérieur du véhicule un habillage de partie de hayon (5), l'élément d'agrandissement de l'espace de chargement (11) étant disposé du côté de l'intérieur du véhicule sur le couvercle de partie de hayon (7) et l'habillage de partie de hayon (5) étant muni d'une ouverture (6) qui communique ou peut communiquer avec une ouverture de communication de l'élément d'agrandissement de l'espace de chargement (11) pour la communication avec l'espace de chargement, le support de hayon (9) étant intégré dans l'arrière du véhicule de façon à pouvoir être déplacé dans le sens de la longueur du véhicule, de façon à pouvoir être amené d'une position de repos à une position d'utilisation pour tendre l'élément d'agrandissement de l'espace de chargement (11) et vice versa.

2. Partie arrière selon la revendication 1, dans laquelle le hayon (2) est partagé en une partie de hayon supérieure (3) et une partie de hayon inférieure (4) pouvant être rabattue séparément.

3. Partie arrière selon l'une des revendications 1 à 2, dans laquelle l'élément d'agrandissement de l'espace de chargement (11) est muni d'une ouverture de chargement pouvant être fermée de façon étanche à l'eau et aux gaz pour le chargement de l'espace de chargement.

4. Véhicule à moteur muni d'une partie arrière selon l'une des revendications 1 à 3.
